# EUROPÄISCHE PATENTSCHRIFT

(11) **EP 1 106 987 B1**
(45) Veröffentlichungstag und Bekanntmachung des Hinweises auf die Patenterteilung: **08.06.2005**
(21) Anmeldenummer: 00890362.7
(22) Anmeldetag: 30.11.2000
(51) Int. Cl.: G01N 21/05, G01N 21/03, G01N 21/76, G01N 21/64

(54) **Messkammer mit lumineszenzoptischen Sensorelementen**
Measuring chamber with luminescent optical sensor elements
Chambre de mesure avec elements optiques luminescents de détection

(30) Priorität: 02.12.1999 AT 202899
(43) Veröffentlichungstag der Anmeldung: 13.06.2001
(73) Patentinhaber: F.HOFFMANN-LA ROCHE AG, 4070 Basel (CH)
(72) Erfinder: Ziegler, Dipl. Ing. Werner, 8043 Graz (AT)
(74) Vertreter: Babeluk, Michael, Dipl.-Ing.

(56) Entgegenhaltungen:
- EP-A- 0 120 715
- EP-A- 0 460 343
- EP-A- 0 793 090
- LEINER M J P: "OPTICAL SENSORS FOR IN VITRO BLOOD GAS ANALYSIS" SENSORS AND ACTUATORS B, ELSEVIER SEQUOIA S.A., LAUSANNE, CH, Bd. B29, 1995, Seiten 169-173, XP000884618 ISSN: 0925-4005

## Beschreibung

Die Erfindung betrifft eine Messkammer, vorzugsweise Durchflussmesskammer, aus einem für die Anregungs- und Messstrahlung zumindest teilweise transparenten Basis- und Deckteil, wobei ein Messkammerteil eine Längsnut aufweist und nach dem Zusammenfügen mit dem anderen Messkammerteil einen Messkanal bildet, mit in einem Sensorbereich angeordneten lumineszenzoptischen Sensorelementen.

Derartige Messkammern dienen zur gleichzeitigen Messung mehrerer Parameter in flüssigen oder gasförmigen Proben, welche in die Messkammer eingebracht bzw. im Fall von Durchflussmesskammern mittels entsprechender Pump- oder Saugeinrichtungen transportiert werden. Beispielsweise ist aus M.J.P. LEINER, Sensors and Actuators B29 (1995) 169 - 173 unter dem Titel "Optical sensors for in vitro blood gas analysis" eine Messkammer zur gleichzeitigen Messung von pH, PCO₂ und PO₂ im Blut bekannt geworden, wobei die Messkammer als Durchflussmesszelle ausgebildet ist. Diese besteht im wesentlichen aus zwei Spritzgussteilen aus einem für die Anregungs- und Messstrahlung der verwendeten lumineszenzoptischen Sensoren transparenten Plastikmaterial. An den stirnseitigen Enden der Messzelle sind Anschlüsse für den Probenzu- bzw. Probenablauf angeformt. Der Basisteil der Messkammer weist in einem Sensorbereich drei zylindrische Vertiefungen zur Aufnahme der Sensorelemente auf. Im Deckteil der Messkammer befindet sich eine nutförmige Vertiefung, welche zusammen mit dem Basisteil den Messkanal bildet, welcher in etwa 40 µl Probenvolumen aufweist. Die Anregung des Lumineszenzindikators in den einzelnen lumineszenzoptischen Sensorelementen, sowie die Detektion der Lumineszenzstrahlung erfolgt über zweiarmige Lichtleiter, welche auf den Basisteil der Messkammer gerichtet sind.

Als Anregungslichtquelle wird eine Halogenlichtquelle verwendet, wobei die benötigten Anregungswellenlängen über entsprechende Filter bereitgestellt werden. Die von den einzelnen Sensorelementen emittierte Lumineszenzstrahlung wird durch jeweils separate Lichtleiter und Kantenfilter Detektoren zugeführt, welche mit der Auswerteeinheit verbunden sind. Die Messkammer ist als Einweg-Messzelle (Disposable) konzipiert und wird bei der Messung in ein thermostatisiertes Messgerät eingelegt und auf eine konstante Temperatur von 37°C gebracht. Die scheibchenförmigen Sensorelemente sind schichtförmig aufgebaut, wobei in Richtung Messkanal eine Kleberschicht, eine transparente Trägerschicht, eine Sensorschicht sowie eine optische Deckschicht angeordnet sind. Die optische Deckschicht bzw. Isolierschicht dient dazu, Fehllicht von der Probe oder der Umgebung (z.B. Eigenfluoreszenz oder Umgebungslicht) von der Indikatorschicht des Sensors fernzuhalten und dadurch die Sensorelemente optisch zu entkoppeln. Nach dem Einbringen der einzelnen Sensorelemente in die zylindrischen Vertiefungen des Basisteils werden die beiden Messkammerteile zusammengeklebt. Aufgrund der unterschiedlichen Materialien, mit welchen die Probe im Messkanal in Berührung kommt, kann es zu Schwierigkeiten beim Füllen des Messkanals kommen, da unterschiedliche Materialien, wie die Messkammerwand und die optische Deckschicht in unterschiedlichem Maße von der Probe benetzbar sind und so beispielsweise Luftblasen oder inhomogene Strömungsverhältnisse gebildet werden können. Dadurch kann es zu einem seitlichen Umströmen des Sensorelementes kommen.

Weiters ist aus der EP 0 354 895 B1 ein Einweg-Messelement zur gleichzeitigen Vermessung mehrerer unterschiedlicher Probenbestandteile bekannt geworden, welches aus einem Sensorteil und einem damit verbundenen Probennahmeteil besteht. Der Sensorteil weist einen durchgehenden Probenkanal auf, in welchem mehrere Sensorelemente angeordnet sind. Die Anregung der Sensorelemente bzw. die Detektion der Messstrahlung erfolgt über Lichtleiter, welche von außen zum transparenten Sensorteil geführt sind.

Aus der EP-A-0 460 343 ist ein Verfahren zu Analyse von gasförmigen oder flüssigen Proben, sowie ein Einweg-Messelement zur Ausübung des Verfahrens bekannt. Das Einweg-Messelement ist aus einem oberen Gehäuseteil und einem unteren Gehäuseteil zusammengesetzt, wobei in einem Mittelteil des Messelementes ein Messkanal ausgebildet ist, welcher an beiden Enden Öffnungen zum Anschluss eines Analysengerätes bzw. eines Probennahmeteils aufweist. Der Messkanal weist im unteren Gehäuseteil optische Sensoren auf, mit deren Hilfe die Probe analysiert werden kann. Zur Ankoppelung an das Analysengerät bzw. des Probennahmeteils sind an den Enden des Messelementes drehbare Einsätze in entsprechenden Ausnehmungen des Messelementes angeordnet.

Schließlich ist aus der EP-A-0 793 090 eine Messanordnung bekannt, welche ein für die verwendete Anregungs- und Messstrahlung transparentes Trägerelement aufweist. Eine der Grenzflächen des Trägerelementes weist lumineszenzoptische Sensorelemente auf. Der gemeinsame Probenkanal für alle lumineszenzoptischen Sensorelemente wird durch eine Nut in einem Deckteil realisiert, welches an der Grenzfläche mit den Sensorelementen dichtend anliegt. Die Sensorelemente werden über eine zweite Grenzfläche des Trägerelementes angeregt, wobei an einer dritten Grenzfläche die zu einem Detektor gelangende Messstrahlung austritt. Die Richtung der Anregungsstrahlung steht zur Trennung der Lichtwege im Wesentlichen normal auf die Detektionsrichtung. Die Messanordnung weist weiters Einrichtungen zur optischen und/oder zeitlichen Trennung der Lichtwege der Messstrahlung der einzelnen Sensorelemente auf.

Aufgabe der vorliegenden Erfindung ist es, ausgehend vom eingangs genannten Stand der Technik eine Messkammer vorzuschlagen, welche einfach und billig herzustellen ist, wobei im Messkanal homogene Strömungsverhältnisse herrschen sollen und bei im wesentlichen gleichen Probenvolumen eine größere Anzahl von Einzelparametern gemessen werden kann.

Diese Aufgabe wird erfindungsgemäß dadurch gelöst, dass sowohl im Basisteil als auch im Deckteil je eine Längsnut vorgesehen ist, welche gemeinsam den Messkanal bilden, sowie dass in der Längsnut des Basisteiles und des Deckteiles Sensorelemente angeordnet sind, welche mit je einer den gesamten Sensorbereich bedeckenden, optischen Deckschicht versehen sind. Durch die erfindungsgemäßen Maßnahmen erreicht man bei im wesentlichen gleichen Probenvolumen eine Verdoppelung der Anzahl der lumineszenzoptischen Sensorelemente, da diese sowohl im Basis- als auch im Deckteil angeordnet sind. Da die Längsnut sowohl im Basis- als auch im Deckteil mit einer durchgehenden, den gesamten Sensor bereich bedeckenden, optischen Deckschicht versehen ist, bilden die beiden Deckschichten einen flachen Probenkanal bzw. Kapillarspalt, in welchem die Probe ohne Bildung von Luftblasen und ohne Ausbildung ungünstiger Strömungsprofile durch den Messkanal geführt werden kann.

Besonders vorteilhaft ist es, wenn die optische Deckschicht im Basis- und im Deckteil jeweils zu den beiden Nutkanten der Längsnut hochgezogen ist und somit eine homogene Auskleidung des Messkanals bildet.

In einer bevorzugten Ausführungsvariante ist es auch möglich, dass mehrere Sensorelemente zu einer Gruppe zusammengefasst sind. Dabei kann es sich auch um Gruppen gleichartiger Sensorelemente handeln, wenn man beispielsweise aus mehreren Einzelmessungen einen Mittelwert bilden will.

Die einzelnen Sensorelemente können beispielsweise in Vertiefungen an der Basis der Längsnut angeordnet und von einer durchgehenden optischen Deckschicht abgedeckt sein.

In einer weiteren Ausführungsvariante ist es auch möglich, dass die optische Deckschicht in die Bereiche zwischen benachbarten Sensorelementen ragt und in diesen Bereichen eine optische Entkopplung benachbarter Sensorelemente bewirkt.

In einer besonders vorteilhaften Variante ist vorgesehen, dass der Basis- und der Deckteil der Messkammer im wesentlichen symmetrisch gestaltete Messkammerteile sind, und jeweils einander zugewandte Innenflächen mit der die Sensorelemente aufnehmenden Längsnut, zu den Innenflächen parallele Außenflächen und im wesentlichen normal auf die Außenflächen stehende Seitenflächen aufweisen. Im Gegensatz zu den Messkammern gemäß Stand der Technik ergeben sich bei der Herstellung große Vorteile, wenn der Basis- und der Deckteil der Messkammer völlig baugleiche Spritzgussteile sind, welche mit unterschiedlichen Sensorelementen oder auch Gruppen von Sensorelementen bestückt werden können. So ist es beispielsweise möglich, im Basisteil Sensorelemente für die Messung von pH, PCO₂ und PO₂ vorzusehen und diesen Basisteil mit einem Deckteil zu kombinieren, welcher Sensorelemente für die Bestimmung unterschiedlicher Elektrolyte, beispielsweise Natrium, Kalium und Kalzium aufweist. Andererseits kann der Basisteil, welcher die Blutgasparameter pH, PO₂ und PCO₂ misst, mit einem Deckteil kombiniert werden, welcher Biosensoren trägt, die zur Bestimmung von z.B. Lactat, Glucose, Harnstoff, Creatinin etc. dienen. Der Vorteil besteht darin, dass einzelne Messkammerteile mit einer Gruppe von Sensorelementen versehen werden können, und derart bestückte Messkammerteile aufgrund ihrer Symmetrie - abhängig von den gewünschten Parametern - zu unterschiedlichen Messkammern zusammengefügt werden können.

Erfindungsgemäß ist es bei derartigen symmetrischen, im wesentlichen quaderförmigen Messkammerteilen möglich, dass die optische Anregung der einzelnen Sensorelemente über die Seitenflächen und die Detektion der Messstrahlung über die Außenflächen der symmetrischen Messkammerteile erfolgt. Damit erfolgt die optische Trennung der Anregungsstrahlung von der Messstrahlung bereits im jeweiligen Messkammerteil. Das allgemeine Prinzip der optischen Trennung der Anregungsstrahlung von der Messstrahlung in einem transparenten Trägerelement wird in der AT 383 684 B beschrieben. Hier wird ein Trägerelement mit planparallelen Begrenzungsflächen vorgeschlagen (vergleichbar mit dem Basis- bzw. Deckteil der Erfindung), welches auf einer dieser Flächen eine Sensorschicht aufweist, wobei diese Sensorschicht von einer Strahlungsquelle mit Anregungsstrahlung beaufschlagt wird. Das Licht der Strahlungsquelle fällt durch eine Blendeneinrichtung auf die Sensorschicht, wobei die entstehende Messstrahlung im wesentlichen normal zur Richtung der Anregungsstrahlung zu einem an einer seitlichen Begrenzungsfläche des Trägerelementes angeordneten Detektor abgeführt wird. Die Lichtleitung im Trägerelement erfolgt im wesentlichen durch Totalreflexion der Messstrahlung an den Begrenzungsflächen des Trägerelementes. Dieses Prinzip ist auch umkehrbar, das heißt die Anregung kann über die Seitenfläche und die Detektion über die zur Sensorfläche parallele Fläche erfolgen.

Besonders vorteilhaft ist es beispielsweise, wenn die Sensorelemente des Basis- und des Deckteiles jeweils paarweise gegenüberliegend angeordnet sind. Es kann dann beispielsweise eine seitlich angeordnete Lichtquelle jeweils zwei Sensorelemente mit Anregungsstrahlung beaufschlagen, deren Messstrahlung einerseits über die Außenfläche des Basisteils und andererseits über die Außenfläche des Deckteils detektiert werden. Eine optische Entkopplung der Messstrahlung beider Sensorelemente erfolgt über die beiden den Messkanal auskleidenden optischen Deckschichten.

Um eine gegenseitige optische Beeinflussung von Sensorelementen auszuschließen, welche im Basis- oder Deckteil nebeneinander angeordnet sind, können diese jeweils einzeln mit optischen Lichtleitern kontaktiert sein. Es können allerdings auch optische oder elektronische Maßnahmen getroffen werden, welche beispielsweise aus der EP 0 793 090 A1 bekannt sind.

Zur besseren Einkopplung der Anregungsstrahlung in den Basis- bzw. Deckteil der Messkammer ist es von Vorteil, wenn für jedes Sensorelement an zumindest einer Seitenfläche eines Messkammerteils ein optisches Element, vorzugsweise eine Sammellinse, eine Fresnellinse oder eine Gitterstruktur angeordnet oder ausgebildet ist, welche die Anregungsstrahlung in Richtung der Sensorelemente einkoppelt oder fokussiert.

Die erfindungsgemäße Messkammer lässt sich auf sehr einfache Weise thermostatisieren, wenn zwischen dem Basisteil und dem Deckteil eine in den Messkanal ragende, beheizbare Folie angeordnet wird. Im Unterschied zum Stand der Technik muss bei der Thermostatisierung der Probe nicht erst die wärmedämmende Wirkung der Messkammerwand überwunden werden, da die Thermostatisierung für alle Sensorelemente in gleicher Weise direkt im Inneren des Messkanals erfolgt, wobei die guten Wärmeleiteigenschaften der wässrigen Probe genützt werden.

Vorteilhafterweise kann die beheizbare Folie eine elektrisch leitende Schicht in Form einer mäandrierenden Leiterbahn aufweisen.

In einer Weiterbildung der Erfindung kann auch zwischen dem Basisteil und dem Deckteil eine den Messkanal in zwei Teilkanäle auftrennende Trennfolie angeordnet sein. In der Messkammer kann durch diese Maßnahme in einem Teilkanal ein Kalibrier- bzw. Qualitätskontrollmittel vermessen werden, wobei gleichzeitig im zweiten Teilkanal die Inhaltsstoffe einer Probe detektiert werden können. Es werden in diesem Anwendungsfall bevorzugt gleichartige Sensorelemente paarweise gegenüberliegend angeordnet und mit derselben Lichtquelle mit Anregungsstrahlung beaufschlagt.

Weiters ist es möglich, die Trennfolie gleichzeitig als Heizfolie zur Thermostatisierung der Messkammer zu verwenden.

Die Erfindung wird im folgenden anhand von Zeichnungen näher erläutert. Es zeigen
- Fig. 1: eine erfindungsgemäße Messkammer in einer Schnittdarstellung senkrecht zur Messkammerachse,
- Fig. 2: den Basisteil der Messkammer nach Fig. 1 in einer dreidimensionalen Darstellung,
- Fig. 3a und 3b: jeweils eine Variante des Basisteils der Messkammer in Draufsicht,
- Fig. 4: einen Schnitt entlang der Linie IV - IV in Fig. 2,
- Fig. 5: einen Schnitt entlang der Linie V - V in Fig. 2,
- Fig. 6: bzw. Fig. 7 unterschiedliche Ausführungsvarianten der Messkammer in einer Schnittdarstellung gemäß Fig. 4 bzw. Fig. 5,
- Fig. 8: eine Ausführungsvariante in einer Schnittdarstellung gemäß Fig. 5,
- Fig. 9: und Fig. 10 weitere Ausführungsvarianten der Messkammer in einer Schnittdarstellung gemäß Fig. 1,
- Fig. 11: die Messkammer nach Fig. 10 in einem Längsschnitt,
- Fig. 12: ein Detail aus Fig. 11 sowie
- Fig. 13: eine weitere Ausführungsvariante der Messkammer in einem Längsschnitt.

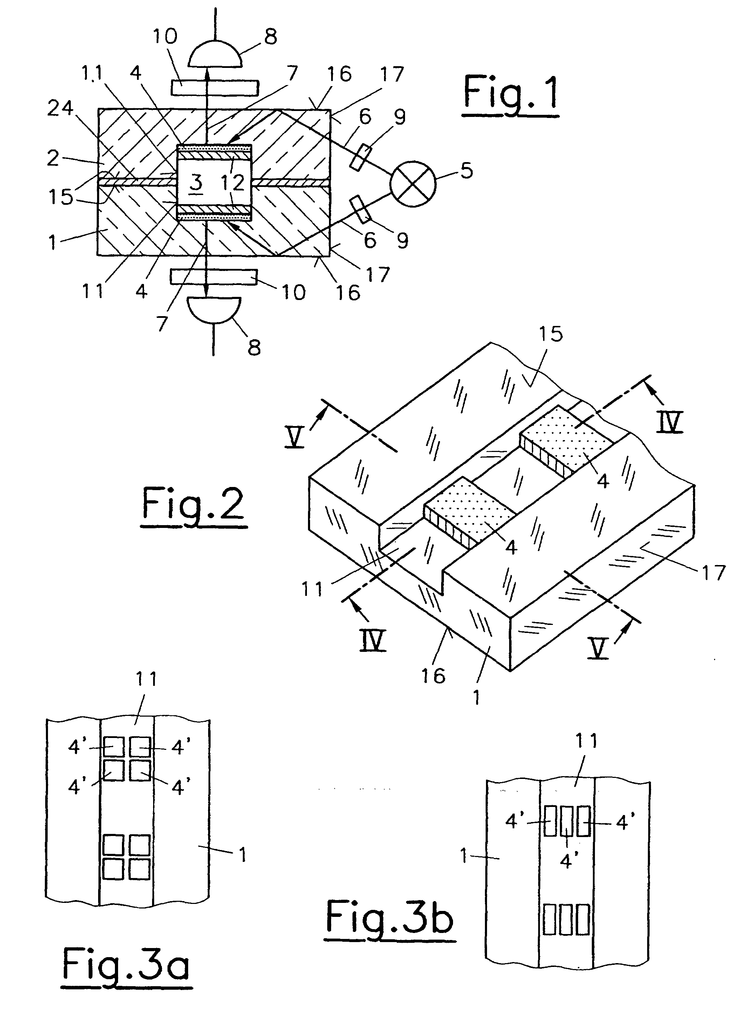

Die in Fig. 1 dargestellte Messkammer weist einen transparenten Basisteil 1 sowie einen transparenten Deckteil 2 auf, welche nach dem Zusammenfügen einen Messkanal 3 bilden. Die Messkammer ist in Fig. 1 in einer Schnittdarstellung dargestellt, wobei die Schnittebene durch die im Messkanal 3 angeordneten lumineszenzoptischen Sensorelemente 4 geführt ist und normal auf die Achse des Messkanals 3 steht. Die Sensorelemente 4 werden von der Lichtquelle 5 mit Anregungsstrahlung 6 beaufschlagt, wobei die in Abhängigkeit von den Probenparametern emittierte Messstrahlung 7 von geeigneten Detektoren 8 erfasst wird. Im Wege der Anregungsstrahlung 6, sowie der Messstrahlung 7 können Anregungsfilter 9 bzw. Messfilter 10 angeordnet sein. Sowohl im Basisteil 1 als auch im Deckteil 2 ist je eine Längsnut 11 vorgesehen, welche nach dem Zusammenfügen der beiden Messkammerteile 1, 2 den Messkanal 3 bilden. Unter optimaler Ausnützung des Messkanalvolumens sind sowohl in der Längsnut des Basisteiles 1 als auch des Deckteiles 2 Sensorelemente 4 angeordnet, welche jeweils mit einer den gesamten Sensorbereich bedeckenden durchgehenden optischen Deckschicht 12 versehen sind. Damit wird eine weitgehend homogene Auskleidung des Messkanals 3 erzielt, wodurch eine störungsfreie Befüllung des Messkanals garantiert ist.

Die den Sensorbereich bedeckende optische Deckschicht 12 weist folgende, auf den jeweiligen Anwendungsfall optimierbare Eigenschaften auf:

### Geometrische Eigenschaften der Messkammer:

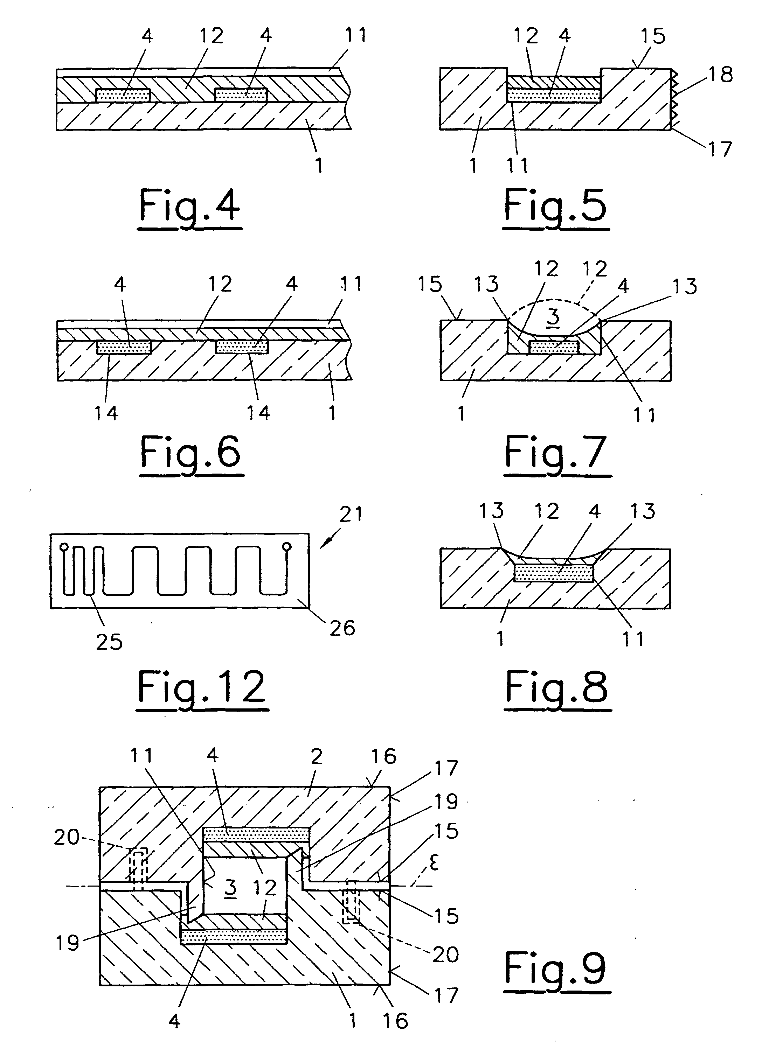

Der für das Strömungs- und Füllverhalten im Messkanal 3 verantwortliche Kanalquerschnitt kann durch die Art der Ausformung der optischen Deckschicht unterschiedlich gestaltet werden. So kann ein rechteckförmiger Querschnitt mit beliebigen Seitenverhältnissen bis zum Kapillarspalt realisiert werden, wobei die Ecken abgerundet sein können. Es sind auch linsenförmige (siehe Fig. 7), elliptische oder kreisförmige Querschnitte vorstellbar. Derartige Querschnitte können beispielsweise mit Hilfe einer Ziehrakel realisiert werden, wobei für die Deckschicht ein Isoliermaterial mit geeigneter Viskosität ausgewählt werden muss. Es ist anzustreben, dass der Messkanal über die gesamte Länge (zumindest im Sensorbereich) die selbe Breite aufweist und daher bei durchgehender, homogener Beschichtung auch den selben Strömungsquerschnitt besitzt.

Die optische Deckschicht 12 kann auch durch Dispensieren aufgebracht werden, sofern das Material ausreichend fließfähig ist und entsprechende Fertigungsmasken verwendet werden. Diese Methode wird vorzugsweise dann angewandt, wenn die Sensorelemente in Vertiefungen der Längsnut 11 (siehe Fig. 6) angeordnet sind oder allseitig von der Deckschicht 12 umschlossen sein sollen. Weiters ist es möglich, die Deckschicht 12 durch Tampondruck aufzubringen, wobei der Druckvorgang so oft wiederholt wird, bis die gewünschte Schichtdicke erreicht ist.

### Chemische physikalische Eigenschaften der Deckschicht:

Je nach Wahl des Materials für die Deckschicht 12, beispielsweise Silicon, Hydrogel, Polystyrol, Polyvinylchlorid mit Weichmachern u. s. w., können folgende wichtige Eigenschaften für den jeweiligen Anwendungsfall optimiert werden:
- Benetzbarkeit für die Probe (Blut, Serum, Plasma, etc.), sowie für Kontroll- und Kalibierflüssigkeiten;
- Gasdiffusion, Dampfdiffusion,
- Permeabilität für Flüssigkeiten und Gase,
- Permeabilität für Protonen,
- Speicherfähigkeit für Flüssigkeiten.

### Optische Eigenschaften der Deckschicht:

Durch die Zugabe von Füllstoffen, deren Art, Farbe, Konzentration variiert werden kann, können die optischen Eigenschaften der Deckschicht an die Messsituation angepasst werden. Dabei gilt es, Strahlung aus der Probe (Umgebungslicht bzw. Eigenfluoreszenz) weitgehend zu unterdrücken und damit für eine sogenannte optische Entkopplung zwischen Probe und Sensorelement zu sorgen. Im Bereich zwischen einzelnen Sensorelementen sorgt die optische Deckschicht für eine optische Entkopplung der einzelnen Sensorelemente. Beispielsweise wird durch einen schwarzen Füllstoff (Ruß) Licht absorbiert, das sich ansonsten zwischen zwei benachbarten Sensorelemente ausbreiten könnte.

Es sei darauf hingewiesen, dass in allen Abbildungen die Höhe des Messkanals 3 sowie die Dicke der Sensorschicht 4 und der optischen Deckschicht 12 zur besseren Anschaulichkeit überhöht dargestellt sind und der eigentliche Messkanal 3 als flacher Spalt (Kapillarspalt) zwischen den beiden optischen Deckschichten 12 ausgebildet sein kann.

Fig. 2 zeigt den Basisteil 2 der Messkammer gemäß Fig. 1 in einer dreidimensionalen Darstellung, wobei zur Darstellung der Sensorelemente 4 in der Längsnut 11 die darüber angeordnete Deckschicht 12 weggelassen wurde.

Die Abbildungen in den Fig. 3a und 3b zeigen jeweils den Basisteil 1 einer Messkammer in Draufsicht, wobei in der Längsnut 11 in der Ausführungsvariante gemäß Fig. 3a jeweils vier Sensorelemente 4' zu einer Gruppe zusammengefasst sind. Eine ähnliche Ausgestaltung zeigt Fig. 3b, wo jeweils drei streifenförmige Sensorelemente 4' zu einer Gruppe zusammengefasst sind. Derartige Gruppen von Sensoren können mit Hilfe von bildgebenden Detektorsystemen, beispielsweise von CCD-Kameras, erfasst werden.

Weitere Anwendungen der optischen Deckschicht 12 sind in den Schnittdarstellungen Fig. 4 bis Fig. 8 erkennbar, wobei diese gemäß Darstellung Fig. 4 in die Bereiche zwischen den benachbarten Sensorelementen 4 ragt und eine optische Entkopplung benachbarter Sensorelemente bewirkt. Gemäß der in Fig. 6 dargestellten Ausführungsvariante ist es auch möglich, dass die Sensorelemente 4 in Vertiefungen 14 an der Basis der Längsnut 11 angeordnet sind, wobei auch hier eine homogene Oberfläche durch die gemeinsame optische Deckschicht 12 gebildet wird.

Wenn man - wie in der Schnittdarstellung gemäß Fig. 7 dargestellt - die optische Deckschicht 12 zu den beiden Nutkanten 13 der Längsnut 11 hochzieht, und eine derartige Ausbildung auch im hier nicht dargestellten Deckteil vorsieht (siehe punktierte Linie 12), so erreicht man eine homogene Auskleidung des gesamten, linsenförmigen Messkanalquerschnittes mit dem Material der optischen Deckschicht 12. Zusätzlich können die Sensorelemente 4 einen Durchmesser aufweisen, welcher kleiner ist als die Breite der Längsnut 11, sodass die Deckschicht 12 die Sensorelemente 4 auch seitlich umfasst und optisch entkoppelt.

Fig. 8 zeigt eine Schnittdarstellung der Messkammer, bei welcher die Längsnut in Richtung zum Messkanal abgeschrägt ist, wobei die Deckschicht 12 ebenfalls zu den Nutkanten 13 hochgezogen ist. Es entsteht dadurch ein flacher, strömungsgünstiger Messkanal.

Wie anhand der unterschiedlichen Ausführungsbeispiele ersichtlich, können die beiden Messkammerteile, nämlich der Basisteil 1 und der Deckteil 2 völlig baugleich bzw. in Hinblick auf die Messkammerachse zentralsymmetrisch ausgeführt sein, sodass diese beiden Teile mit dem identischen Spritzgusswerkzeug hergestellt werden können. Die einzelnen Messkammerteile weisen jeweils einander zugewandte Innenflächen 15, dazu parallele Außenflächen 16 und im wesentlichen normal auf die Außenflächen 16 stehende Seitenflächen 17 auf. Die Längsnut 11 ist jeweils an der Innenfläche 15 ausgebildet. Die optische Anregung der einzelnen Sensorelemente 4 kann beispielsweise über die Seitenflächen 17 der Messkammerteile 1, 2 erfolgen, wobei die Anregungsstrahlung 6 zwischen den zueinander planparallelen Innen- und Außenflächen 15, 16 mittels Totalreflexion bis zu den Sensorelementen 4 geführt wird. Im Bereich der Sensorelemente 4 ist die Totalreflexion durch Angleichung der Brechungsindizes aufgehoben, sodass die Anregungsstrahlung in die Sensorschicht der Sensorelemente 4 eindringen kann. Die von den Sensorelementen emittierte Lumineszenzstrahlung 7 wird im wesentlichen normal zur Richtung der Anregungsstrahlung durch die an den Außenflächen 16 angeordneten Detektoren 8 gemessen.

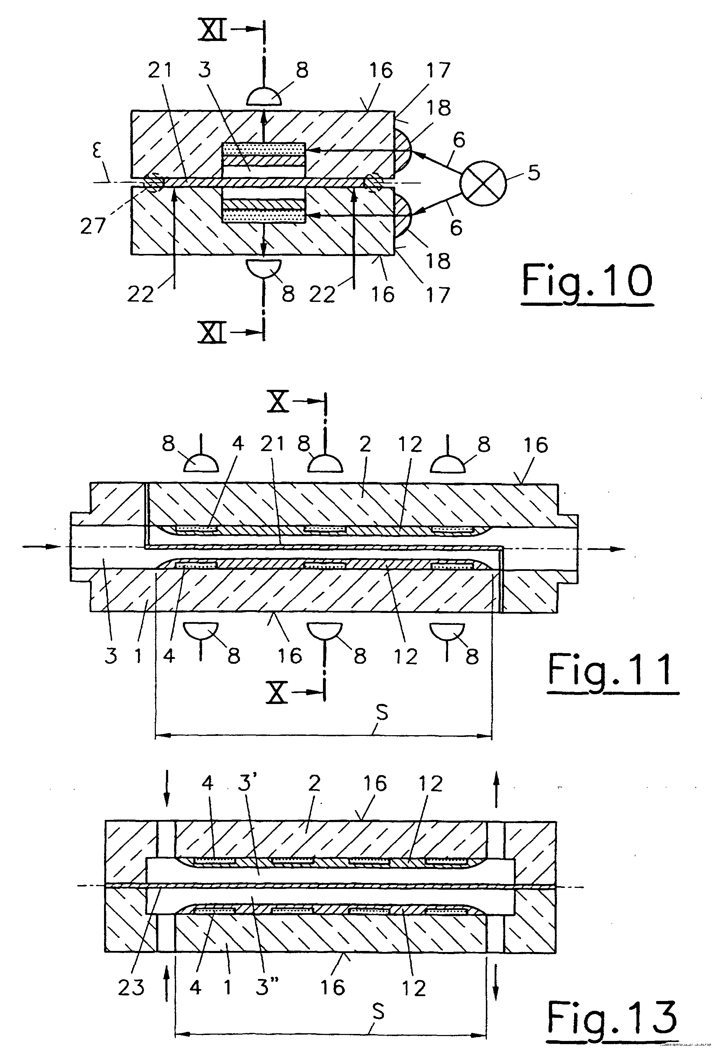

Zur besseren Einkopplung der Anregungsstrahlung bzw. zur Fokussierung der Anregungsstrahlung in Richtung der Sensorelemente 4 kann an einer Seitenfläche 17 jedes Messkammerteiles 1, 2 ein optisches Element 18, beispielsweise eine Sammellinse (siehe Fig. 10) bzw. eine Fresnellinse oder eine Gitterstruktur (siehe Fig. 5) angeordnet oder einstückig ausgebildet sein. Es können beispielsweise derartige optische Elemente 18 an den Seitenflächen 17 der Messkammerteile bereits spritzgusstechnisch hergestellt werden.

In Fig. 9 ist eine Ausführungsvariante der erfindungsgemäßen Messkammer dargestellt, bei welcher die Längsnut 11 des Basis- und des Deckteiles 1, 2 entlang einer Nutkante eine über die Dichtebene ε hinaus ragende Schneidkante 19 aufweist, welche im zusammengebauten Zustand der beiden Messkammerteile 1, 2 dichtend in die jeweils gegenüberliegende optische Deckschicht 12 ragt. Es entsteht somit eine zentralsymmetrische Messkammer, wobei die Messkammerteile 1, 2 völlig baugleich sind. Weiters können bei dieser Ausführungsvariante im Basisteil 1 Rast- und Zentrierelemente 20 vorgesehen sein, die in entsprechende symmetrisch angeordnete Rast- und Zentrierelemente 20 des Deckteiles 2 einrasten. Beim Zusammenbau dieser Messkammer müssen die beiden Messkammerteile 1 und 2 lediglich zusammengeklipst werden, die Dichtfunktion übernehmen die beiden Schneidkanten 19 im Zusammenhang mit der dauerelastischen Verformung der Deckschicht 12. Eine zusätzliche Dichtung bzw. ein Verkleben der beiden Messkammerteile ist nicht notwendig.

In den Figuren 10 und 11 (siehe Schnittführung gemäß Linie XI - XI in Fig. 10 bzw. Linie X - X in Fig. 11) ist eine Ausführungsvariante der Messkammer dargestellt, welche zwischen dem Basisteil 1 und dem Deckteil 2 eine in den Messkanal 3 ragende, beheizbare Folie 21 zur Thermostatisierung der Messkammer 3 aufweist. Die mit 22 bezeichneten elektrischen Anschlüsse für die beheizbare Folie 21 können auch seitlich in der Dichtebene ε aus der Messkammer herausgeführt sein. Die beheizbare Folie 21 kann gemäß Fig. 12 beispielsweise in Form einer mäandrierenden Leiterbahn 25 auf eine Trägerfolie 26 aufgebracht sein. Durch ein spezifisches Design der Leiterbahnen (Breite, Formgebung, Leiterbahnführung, Abstand der Leiterbahnen zueinander) kann die örtliche Heizleistung den Erfordernissen angepasst werden. So ist z.B. beim Probeneinlauf eine erhöhte Heizleistung notwendig um die Probe rasch vor- bzw. aufzuwärmen.

Bei der Anordnung mehrerer Sensorelemente in einem Messkammerteil (siehe Fig. 11; jeweils 3 Sensorelemente im Basisteil 1 und im Deckteil 2) muss die von den einzelnen Sensorelementen eines Messkammerteiles stammende Messstrahlung eindeutig den einzelnen Sensorelementen zugeordnet werden. Dazu stehen sowohl optische Trenneinrichtungen als auch elektronische bzw. mathematische Einrichtungen in der Auswerteeinrichtung zur Verfügung, wie diese beispielsweise in der EP 0 793 090 A1 geoffenbart sind. Insbesondere sei dabei erwähnt, dass die Anregung sowie die Auswertung zeitlich gepulst werden kann, bzw. dass die Anregungs- und die Messstrahlung moduliert und entsprechend demoduliert werden kann. Innerhalb der Messkammer ist zumindest der Sensorbereich S mit der durchgehenden Deckschicht 12 bedeckt.

Gemäß Ausführungsvariante Fig. 13 ist es auch möglich, zwischen dem Basisteil 1 und dem Deckteil 2 eine den Messkanal 3 in zwei Teilkanäle 3', 3" auftrennende Trennfolie 23 anzuordnen. Mit einer derartigen Messkammer kann über den ersten Teilkanal 3' eine Probe und über den zweiten Teilkanal 3" gleichzeitig ein Kalibrier- oder Referenzmittel vermessen werden. Wenn gleichartige Sensorelemente 4 gegenüberliegend angeordnet sind, können beide mit derselben Lichtquelle angeregt werden (siehe Anregungsgeometrie gemäß Fig. 10), sodass Intensitätsschwankungen der Lichtquelle keinen Einfluss auf das Verhältnis Probe- zu Referenzsignal haben.

Neben einer Verbindung durch Zusammenklipsen (siehe Fig. 9), kann eine flüssigkeitsdichte Verbindung zwischen Basisteil 1 und Deckteil 2 auch durch Schweißen oder durch Kleben (siehe z.B. Klebeschicht oder Doppelklebeband 24 gemäß Fig. 1) erfolgen. Weiters kann zwischen dem Basisteil 1 und dem Deckteil 2 ein Dichtelement 27 angeordnet sein (Fig. 10).

Es folgen Beispiele für Dimensionierungs- und Materialangaben, welche jedoch keine Einschränkungen der Erfindung darstellen sollen.

### Materialien für die Messkammerteile:

- PC: Polycarbonat
- PMMA: Poly-Methyl-Methacrylat
- COC: Zykloolefin - Copolymerisat
- PS: Polystyrol
- PMP: Poly-Methyl-Penten Polyacrylate

### Materialien für die Heizfolie:

- Reine Metallfolie z.B. Alu, Gold
- Metallfolie mit dünner Beschichtung durch ein Polymer, vorteilhaft das selbe Material wie die optische Deckschicht
- Trägerfolie (Mylar, Kapton) bedruckt mit elektrisch leitender Schicht, vorzugsweise als Leiterbahnen ausgeführt.
- Trägerfolie mit einer aufgesputterten Metalloxid-Schicht z.B. bekannt als ITO = Indium-Zinn-Oxid.

### Abmessungen der Messkammer:

- Anzahl der Sensoren: 2-7 Sensoren in Reihe Pro Längsnut 11, vorzugsweise 3-5 Sensoren in Reihe
- Fläche pro Sensor: 2-30 mm², vorzugsweise 4-16 mm²
- Kanalbreite: 2-10 mm, vorzugsweise 3-5 mm
- Aktive Kanalhöhe: 0.08-0.2 mm, vorzugsweise 0.1-0.15 mm
- Dicke der Deckschicht: 5-200 µm, vorzugsweise 10-50 µm
- Abstand Sensor-Sensor: > 3 mm, vorzugsweise 4-5 mm

### Volumen des Messkanals:

Kleine Messkammer:
   Je 3 Sensoren à 3x3 mm² im Basis- u. Deckteil
   Sensorabstand 3 mm
   Vor- u. Nachlaufstrecke 5 mm
   Kanallänge 25 mm, Kanalbreite 3 mm, Kanalhöhe 0,1 mm
   Füllvolumen: 7,5 µl
Mittlere Messkammer:
   Je 4 Sensoren à 4x3 mm² im Basis- u. Deckteil
   Sensorabstand 4 mm Abstand Sensor Kanalrand 0.5 mm
   Vor- u. Nachlaufstrecke ca. 7 mm
   Kanallänge 42 mm, Kanalbreite 4 mm, Kanalhöhe 0,15 mm
   Füllvolumen: 25 µl
Große Messkammer:
   je 6 Sensoren à 5x5 mm² im Basis- u. Deckteil
   Sensorabstand 5 mm, Abstand Sensor Kanalrand 0.5 mm
   Vor- Nachlaufstrecke ca. 10 mm
   Kanallänge 75 mm, Kanalbreite 6 mm, Kanalhöhe 0,2 mm
   Füllvolumen: 90 µl

Für das Aufbringung der Sensoren stehen folgende Fertigungsmethoden zur Verfügung:
A) bei einem ebenen Boden im Messkanal ohne Vertiefungen:
   1. Einkleben der auf einer Trägerfolie vorgefertigten Sensoren. Der Kleber muss transparent sein. Jeder Sensor wird aus einer großflächigen Folie ausgestanzt und einzeln an der passenden Position eingesetzt.
   2. Auf einem Folienstreifen, der die Form des Messkanals aufweist, sind die einzelnen Sensoren vorgefertigt. Vorzugsweise werden diese Sensorarrays quer zur Längsrichtung von einem langen Folienband streifenweise abgeschnitten. Auf diesem Folienband sind in Längsrichtung in Form von schmalen durchgehenden Streifen die sensitiven Schichten aufgebracht. Die durchgehende optische Deckschicht kann vor oder nach dem Einkleben des Sensorstreifens in den Probenkanal aufgebracht werden.
   3. Tampon-Druck-Verfahren: Die Sensorschicht wird mit ein- oder mehrmaligem Druck aufgebracht. Mehrlagige Sensoren liefern ein größeres Signal, weisen aber eine längere Ansprechzeit auf.
   4. Verwenden einer Fertigungsmaske (= selbsthaftende Polymerfolie mit Freistellungen an den Sensorpositionen), die nach dem Beschichtungsprozess entfernt wird. In die durch die Maske gebildeten Vertiefungen werden die Sensoren mittels Dispensiertechnik oder Ink-Jet Verfahren initiiert.
B.) bei einem mit Vertiefungen zur Aufnahme der Sensoren versehenen Messkanal:
   1. Dispensieren des Sensormaterials
   2. Einbringen durch Ink-Jet-Verfahren
   3. Einkleben der auf einer Trägerfolie vorgefertigten Sensoren.

## Patentansprüche

1. Messkammer, vorzugsweise Durchflussmesskammer, aus einem für die Anregungs- (6) und Messstrahlung (7) zumindest teilweise transparenten Basis- (1) und Deckteil (2), wobei ein Messkammerteil eine Längsnut (11) aufweist und nach dem Zusammenfügen mit dem anderen Messkammerteil einen Messkanal (3) bildet, mit in einem Sensorbereich angeordneten lumineszenzoptischen Sensorelementen (4), **dadurch gekennzeichnet, dass** sowohl im Basisteil (1) als auch im Deckteil (2) je eine Längsnut (11) vorhanden ist, welche gemeinsam den Messkanal (3) bilden, sowie dass in der Längsnut (11) des Basisteiles (1) und des Deckteiles (2) Sensorelemente (4) angeordnet sind, welche mit je einer den gesamten Sensorbereich bedeckenden durchgehenden optischen Deckschicht (12) versehen sind, so dass eine weitgehend homogene Auskleidung des Messkanals erzielt wird.

2. Messkammer nach Anspruch 1, **dadurch gekennzeichnet, dass** die Sensorelemente (4) in Vertiefungen (14) an der Basis der Längsnut (11) angeordnet sind.

3. Messkammer nach Anspruch 1, **dadurch gekennzeichnet, dass** mehrere Sensorelemente (4') zu einer Gruppe zusammengefasst sind.

4. Messkammer nach Anspruch 1, **dadurch gekennzeichnet, dass** die optische Deckschicht (12) in die Bereiche zwischen benachbarten Sensorelementen (4) ragt und in diesen Bereichen eine optische Entkopplung benachbarter Sensorelemente (4) bewirkt.

5. Messkammer nach einem der Ansprüche 1 bis 4, **dadurch gekennzeichnet, dass** die Sensorelemente (4) des Basis- (1) und des Deckteiles (2) jeweils paarweise gegenüberliegend angeordnet sind.

6. Messkammer nach einem der Ansprüche 1 bis 5, **dadurch gekennzeichnet, dass** die optische Deckschicht (12) im Basis- (1) und im Deckteil (2) jeweils zu den beiden Nutkanten (13) der Längsnut (11) hochgezogen ist und somit eine homogene Auskleidung des Messkanals (3) bildet.

7. Messkammer nach einem der Ansprüche 1 bis 6, **dadurch gekennzeichnet, dass** der Basis- (1) und der Deckteil (2) der Messkammer im wesentlichen symmetrisch gestaltete Messkammerteile (1, 2) sind und jeweils einander zugewandte Innenflächen (15) mit der die Sensorelemente (4) aufnehmenden Längsnut (11), zu den Innenflächen (15) parallele Außenflächen (16) und im wesentlichen normal auf die Außenflächen (16) stehende Seitenflächen (17) aufweisen.

8. Messkammer nach Anspruch 7, **dadurch gekennzeichnet, dass** die Seitenflächen (17) der symmetrischen Messkammerteile (1, 2) für die Aufnahme der Anregungsstrahlung (6) der einzelnen Sensorelemente (4) und die Außenflächen (16) der symmetrischen Messkammerteile (1, 2) für die Abgabe der Messstrahlung (7) ausgebildet sind.

9. Messkammer nach Anspruch 7 oder 8, **dadurch gekennzeichnet, dass** für jedes Sensorelement (4) an zumindest einer Seitenfläche (17) eines Messkammerteiles (1, 2) ein optisches Element (18), vorzugsweise eine Sammellinse, eine Fresnellinse oder eine Gitterstruktur angeordnet oder ausgebildet ist, welche die Anregungsstrahlung (6) in Richtung der Sensorelemente (4) einkoppelt oder fokussiert.

10. Messkammer nach einem der Ansprüche 1 bis 9, **dadurch gekennzeichnet, dass** zwischen dem Basisteil (1) und dem Deckteil (2) eine in den Messkanal (3) ragende, beheizbare Folie (21) zur Thermostatisierung der Messkammer (3) angeordnet ist.

11. Messkammer nach Anspruch 10, **dadurch gekennzeichnet, dass** die beheizbare Folie (21) eine elektrisch leitende Schicht in Form einer mäandrierenden Leiterbahn (25) aufweist.

12. Messkammer nach einem der Ansprüche 1 bis 9, **dadurch gekennzeichnet, dass** zwischen dem Basisteil (1) und dem Deckteil (2) eine den Messkanal (3) in zwei Teilkanäle (3', 3") auftrennende Trennfolie (23) angeordnet ist.

13. Messkammer nach einem der Ansprüche 1 bis 12, **dadurch gekennzeichnet, dass** die flüssigkeitsdichte Verbindung zwischen Basis- (1) und Deckteil (2) durch Kleben oder Schweißen hergestellt ist.

14. Messkammer nach einem der Ansprüche 1 bis 12, **dadurch gekennzeichnet, dass** der Basisteil (1) Rast- und Zentrierelemente (20) aufweist, die in entsprechende zentralsymmetrisch angeordnete Rast- und Zentrierelemente (20) des Deckteiles (2) einrasten.

15. Messkammer nach Anspruch 14, **dadurch gekennzeichnet, dass** zwischen dem Basisteil (1) und dem Deckteil (2) ein Dichtelement angeordnet ist.

16. Messkammer nach Anspruch 14 oder 15, **dadurch gekennzeichnet, dass** die Längsnut (11) des Basis- (1) und des Deckteiles (2) entlang einer Nutkante eine über die Dichtebene ε hinausragende Schneidkante (19) aufweist, welche im zusammengebauten Zustand der beiden Messkammerteile (1, 2) dichtend in die jeweils gegenüberliegende optische Deckschicht (12) ragt.

## Claims

1. Measuring chamber, preferably a flow-through chamber comprising a bottom part (1) and a top part (2), which are at least partially transparent to the excitation radiation (6) and measuring radiation (7), one part of the measuring chamber being provided with a longitudinal groove (11) and forming a measuring channel (3) after assembly with the other part of the measuring chamber, with luminescence-optical sensor elements (4) provided in a sensing area, **characterized in that** a longitudinal groove (11) is provided each in the bottom part (1) and in the top part (2), which together form the measuring channel (3), and that sensor elements (4) are placed in the longitudinal groove (11) of the bottom part (1) and the top part (2), each of which elements is coated with a continuous optical cover layer (12) covering the entire sensing area, such that a largely homogeneous lining of the measuring channel (3) is obtained.

2. Measuring chamber according to claim 1, **characterized in that** the sensor elements (4) are positioned in cavities (14) at the bottom of the longitudinal groove (11).

3. Measuring chamber according to claim 1, **characterized in that** a plurality of sensor elements (4') are assembled to form a group.

4. Measuring chamber according to claim 1, **characterized in that** the optical cover layer (12) extends into the areas between adjacent sensor elements (4) to optically decouple adjacent sensor elements (4) in these areas.

5. Measuring chamber according to any of claims 1 to 4, **characterized in that** the sensor elements (4) of the bottom part (1) and the top part (2) are arranged in opposing pairs.

6. Measuring chamber according to any of claims 1 to 5, **characterized in that** the optical cover layer (12) is extended in the bottom part (1) and top part (2) up to the two edges (13) of the longitudinal groove (11), thus forming a homogeneous lining of the measuring channel (3).

7. Measuring chamber according to any of claims 1 to 6, **characterized in that** the bottom part (1) and the top part (2) of the measuring chamber are configured as essentially symmetrical parts (1, 2), and are provided with inner surfaces (15) facing each other and containing the longitudinal groove (11) holding the sensor elements (4), and outer surfaces (16) parallel to the inner surfaces (15), and lateral surfaces (17) essentially normal to the outer surfaces (16).

8. Measuring chamber according to claim 7, **characterized in that** the lateral surfaces (17) of the symmetrical measuring chamber parts (1, 2) are designed to pick up the excitation radiation (6) of the individual sensor elements (4) and the outer surfaces (16) of the symmetrical measuring chamber parts (1, 2) are designed to give off the measuring radiation (7).

9. Measuring chamber according to claim 7 or 8, **characterized in that** for each sensor element (4) at least one lateral surface (17) of a measuring chamber part (1, 2) is provided with an optical element (18), preferably a collimating lens, a Fresnel lens or a grating, which will couple in or focus the excitation radiation (6) in the direction of the sensor elements (4).

10. Measuring chamber according to any of claims 1 to 9, **characterized in that** a heatable foil (21) is provided between the bottom part (1) and the top part (2), which extends into the measuring channel (3) for temperature-control of the measuring chamber.

11. Measuring chamber according to claim 10, **characterized in that** the heatable foil (21) is provided with an electrically conductive layer in the shape of a meandering strip conductor (25).

12. Measuring chamber according to any of claims 1 to 9, **characterized in that** a separating foil (23) is provided between the bottom part (1) and the top part (2), which divides the measuring channel (3) into two separate partial channels (3', 3").

13. Measuring chamber according to any of claims 1 to 12, **characterized in that** the fluid-tight connection between bottom part (1) and top part (2) is established by glueing or sealing.

14. Measuring chamber according to any of claims 1 to 12, **characterized in that** the bottom part (1) is provided with locking and centering elements (20), which lock with locking and centering elements (20) arranged centrally symmetrically in the top part (2).

15. Measuring chamber according to claim 14, **characterized in that** a sealing element (27) is provided between the bottom part (1) and the top part (2).

16. Measuring chamber according to claim 14 or 15, **characterized in that** the longitudinal groove (11) of the bottom part (1) and top part (2) has a cutting edge (19) along one edge of the groove, which cutting edge projects beyond the sealing plane ε and serves as a seal extending into the optical cover layer (12) on the opposite side in the assembled state of the two parts (1, 2) of the measuring chamber.

## Revendications

1. Chambre de mesure, de préférence chambre de mesure de débit, comprenant une partie de base (1) et une partie de recouvrement (2) au moins partiellement transparentes pour le rayonnement d'excitation (6) et le rayonnement de mesure (7), une partie de la chambre de mesure présentant une rainure longitudinale (11) et formant un canal de mesure (3) après l'assemblage avec l'autre partie de chambre de mesure, avec des éléments optiques luminescents de détection (4), disposés dans une zone de détection, **caractérisée en ce que**, aussi bien dans la partie de base (1) que dans la partie de recouvrement (2), il y a une rainure longitudinale (11) qui forment ensemble le canal de mesure (3), et **en ce que** dans la rainure longitudinale (11) de la partie de base (1) et de la partie de recouvrement (2) sont disposés des éléments de détection (4), qui sont pourvus chacun d'une couche de revêtement (12) optique, continue, recouvrant l'ensemble de la zone de détection, de sorte qu'on obtient un habillage largement homogène du canal de mesure.

2. Chambre de mesure selon la revendication 1, **caractérisée en ce que** les éléments de détection (4) sont disposés dans des cavités (14) sur la base de la rainure longitudinale (11).

3. Chambre de mesure selon la revendication 1, **caractérisée en ce que** plusieurs éléments de détection (4') sont réunis en un groupe.

4. Chambre de mesure selon la revendication 1, **caractérisée en ce que** la couche de revêtement (12) optique dépasse dans les zones entre des éléments de détection (4) voisins et entraîne dans ces zones un découplage optique d'éléments de détection (4) voisins.

5. Chambre de mesure selon l'une quelconque des revendications 1 à 4, **caractérisée en ce que** les éléments de détection (4) de la partie de base (1) et de la partie de recouvrement (2) sont disposés à chaque fois de façon opposée par paires.

6. Chambre de mesure selon l'une quelconque des revendications 1 à 5, **caractérisé en ce que** la couche de revêtement (12) optique dans la partie de base (1) et dans la partie de revêtement (2) est relevée respectivement par rapport aux deux bords de rainure (13) de la rainure longitudinale (11) et forme ainsi un habillage homogène du canal de mesure (3).

7. Chambre de mesure selon l'une quelconque des revendications 1 à 6, **caractérisée en ce que** la partie de base (1) et la partie de recouvrement (2) de la chambre de mesure sont des parties de chambre de mesure (1, 2) conçues de façon sensiblement symétrique et présentent à chaque fois des surfaces intérieures (15) tournées les unes vers les autres avec la rainure longitudinale (11) recevant les éléments de détection (4), des surfaces extérieures (16) parallèles aux surfaces intérieures (15) et des surfaces latérales (17) sensiblement perpendiculaires aux surfaces extérieures (16).

8. Chambre de mesure selon la revendication 7 ou 8, **caractérisée en ce que** les surfaces latérales (17) des parties symétriques de la chambre de mesure (1, 2) sont conçues pour la réception du rayonnement d'excitation (6) des éléments de détection (4) individuels et les surfaces extérieures (16) des parties symétriques de la chambre de mesure (1,2) pour l'émission du rayonnement de mesure (7).

9. Chambre de mesure selon la revendication 7 ou 8, **caractérisée en ce que**, pour chaque élément de détection (4), un élément (18) optique, de préférence une lentille collectrice, une lentille de Fresnel ou une structure de grille, qui injecte le rayonnement d'excitation (6) en direction des éléments de détection (4) ou le focalise, est disposé ou réalisé sur au moins une face latérale (17) d'une partie de chambre de mesure (1, 2).

10. Chambre de mesure selon l'une quelconque des revendications 1 à 9, **caractérisée en ce qu'**un film (21) pouvant être chauffé et dépassant dans le canal de mesure (3) est disposée entre la partie de base (1) et la partie de recouvrement (2) pour la thermostatisation de la chambre de mesure (3).

11. Chambre de mesure selon la revendication 10, **caractérisée en ce que** le film (21) pouvant être chauffé présente une couche électroconductrice sous la forme d'une piste conductive décrivant des méandres.

12. Chambre de mesure selon l'une quelconque des revendications 1 à 9, **caractérisée en ce qu'**un film de séparation (23) séparant le canal de mesure (3) en deux canaux partiels (3', 3'') est disposé entre la partie de base (1) et la partie de recouvrement (2).

13. Chambre de mesure selon l'une quelconque des revendications 1 à 12, **caractérisée en ce que** la liaison étanche au liquide entre la partie de base (1) et la partie de recouvrement (2) est établie par collage ou soudage.

14. Chambre de mesure selon l'une quelconque des revendications 1 à 12, **caractérisée en ce que** la partie de base (1) présente des éléments de verrouillage et de centrage (20), qui s'engagent dans des éléments de verrouillage et de centrage (20), appropriés et disposés avec une symétrie centrale, de la partie de recouvrement (2).

15. Chambre de mesure selon la revendication 14, **caractérisée en ce qu'**un élément d'étanchéité est disposé entre la partie de base (1) et la partie de recouvrement (2).

16. Chambre de mesure selon la revendication 14 ou 15, **caractérisée en ce que** la rainure longitudinale (11) de la partie de base (1) et de la partie de recouvrement (2) présente le long d'une rainure longitudinale une arête coupante (19) dépassant du plan d'étanchéité ε, qui, lorsque les deux parties de la chambre de mesure (1, 2) sont assemblées, dépasse de façon étanche dans la couche de revêtement (12) optique respectivement opposée.
